# EUROPÄISCHE PATENTSCHRIFT

(11) **EP 3 673 189 B1**
(45) Veröffentlichungstag und Bekanntmachung des Hinweises auf die Patenterteilung: **21.09.2022**
(21) Anmeldenummer: 18742996.4
(22) Anmeldetag: 16.07.2018
(51) Int. Cl.: F16H 63/34, B60T 1/00, B60T 1/06, F16H 61/02

(54) **VERFAHREN ZUM EINLEGEN EINER PARKSPERRE EINES KRAFTFAHRZEUGS, SOWIE KRAFTFAHRZEUG**
METHOD FOR ENGAGING A PARKING LOCK OF A MOTOR VEHICLE, AND MOTOR VEHICLE
PROCÉDÉ POUR ENCLENCHER UN FREIN DE STATIONNEMENT D'UN VÉHICULE AUTOMOBILE, ET VÉHICULE AUTOMOBILE

(30) Priorität: 25.08.2017 DE 102017214904
(43) Veröffentlichungstag der Anmeldung: 01.07.2020
(73) Patentinhaber: Audi AG, 85045 Ingolstadt (DE)
(72) Erfinder: FÖRSTER, Kilian, 92339 Beilngries (DE); SCHWINDL, Martin, 85375 Neufarn bei Freising (DE)
(86) Internationale Anmeldenummer: PCT/EP2018/069252
(87) Internationale Veröffentlichungsnummer: WO 2019/037951

(56) Entgegenhaltungen:
- EP-A1- 0 972 667
- EP-A2- 1 178 248
- DE-A1- 19 948 969
- DE-A1-102007 040 904
- DE-A1-102007 042 210
- DE-A1-102012 217 704
- DE-A1-102014 202 894
- DE-B3-102004 047 100
- US-A1- 2009 111 648
- US-A1- 2009 111 654

## Beschreibung

Die Erfindung betrifft ein Verfahren zum Einlegen einer Parksperre eines Kraftfahrzeugs gemäß dem Oberbegriff von Patentanspruch 1. Ferner betrifft die Erfindung ein Kraftfahrzeug mit den Merkmalen des Patentanspruchs 11.

Ein solches Verfahren zum Einlegen einer Parksperre eines Kraftfahrzeugs sowie ein solches Kraftfahrzeug sind beispielsweise bereits aus der US 2016 / 0 355 165 A1 beziehungsweise aus der WO 2015 / 128 082 A1 bekannt. Das beispielsweise als Kraftwagen, insbesondere als Personenkraftwagen, ausgebildete Kraftfahrzeug umfasst die Parksperre, eine Betriebsbremse und eine Parkbremse. Im Rahmen des Verfahrens ist es vorgesehen, dass die Parksperre eingelegt wird, während mittels einer Bremsvorrichtung des Kraftfahrzeugs ein Wegrollen des Kraftfahrzeugs zumindest eingeschränkt wird.

Des Weiteren offenbart die DE 10 2009 023 498 B4 eine Parksperrenanordnung für ein Kraftfahrzeug.

Die DE 10 2012 217 704 A1 zeigt ein Verfahren zum automatischen Bremsen eines Kraftfahrzeugs im Fall eines ein Bremsen durch die Betriebsbremsanlage tatsächlich oder potentiell beeinträchtigenden Fehlers. Das Fahrzeug weist ein elektronisch gesteuertes Automatikgetriebe mit Parksperre auf und befindet sich in Bewegung. Das Fahrzeug umfasst vorzugsweise ein Fahrerassistenzsystem, wobei sich der Fahrer außerhalb des fahrenden Fahrzeugs befindet, beispielsweise ein per Fernbedienung kontrollierbares Parkassistenzsystem. Gemäß dem Verfahren wird ein derartiger Fehlerfall erkannt, beispielsweise ein Fehler in Betriebsbremsanlage. In Abhängigkeit der Erkennung des Fehlerfalls wird veranlasst, dass die Parksperre bei Vorliegen des Fehlerfalls eingelegt wird, um das Fahrzeug zu bremsen, insbesondere in den Stillstand abzubremsen.

Die DE 10 2004 047 100 B3 zeigt ein Kraftfahrzeug mit einer elektronisch ansteuerbaren Parksperre und mit einer elektronisch ansteuerbaren Feststellbremse, bei dem die Parksperre und die Feststellbremse unabhängig voneinander betätigbar sind, ist eine elektronische Steuereinheit vorgesehen, die derart ausgestaltet ist, dass bei Vorliegen einer Bedingung zur Aktivierung der Parksperre vor der Aktivierung der Parksperre zuerst die Feststellbremse aktivierbar ist.

Aufgabe der vorliegenden Erfindung ist es, ein Verfahren und ein Kraftfahrzeug der eingangs genannten Art zu schaffen, sodass das Gewicht und die Kosten des Kraftfahrzeugs besonders gering gehalten werden können.

Diese Aufgabe wird erfindungsgemäß durch ein Verfahren mit den Merkmalen des Patentanspruchs 1, sowie durch ein Kraftfahrzeug mit den Merkmalen des Patentanspruchs 11 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Einlegen beziehungsweise Aktivieren einer Parksperre eines Kraftfahrzeugs, insbesondere eines Kraftwagens und vorzugsweise eines Personenkraftwagens. Das Kraftfahrzeug umfasst dabei die Parksperre, eine Betriebsbremse und eine Parkbremse. Die Betriebsbremse wird auch als Betriebsbremsanlage bezeichnet und dient dazu, das Kraftfahrzeug während eines normalen Betriebs zu verlangsamen sowie in seinen Stillstand zu bringen. Hierzu ist die Betriebsbremse beispielsweise von dem Fahrer des Kraftfahrzeugs, insbesondere per Fuß, betätigbar, indem der Fahrer beispielsweise mit seinem Fuß ein Bremspedal betätigt, insbesondere drückt. Die Parkbremse wird üblicherweise auch als Feststellbremse bezeichnet und dient im Gegensatz zu der Betriebsbremse üblicherweise nicht dazu, das Kraftfahrzeug während des normalen Betriebs zu verlangsamen und gegebenenfalls in den Stillstand abzubremsen, sondern dazu, das Kraftfahrzeug, insbesondere dessen Räder, dauerhaft zu blockieren und somit das Kraftfahrzeug in seinem Stillstand und somit gegen ein Wegrollen zu sichern. Insbesondere ist es vorgesehen, dass die Parkbremse als elektrische Parkbremse beziehungsweise elektrische Feststellbremse ausgebildet ist.

Die Parksperre umfasst beispielsweise wenigstens eine Parkklinke, welche beispielsweise zumindest mittelbar bewegbar an einem Gehäuse, insbesondere eines Getriebes, des Kraftfahrzeugs gelagert und zwischen wenigstens einer Freigabestellung und wenigstens einer Sperrstellung relativ zu dem Gehäuse bewegbar, insbesondere verschwenkbar, ist. In der Sperrstellung greift beispielsweise die Parkklinke in eine korrespondierende Ausnehmung ein, welche beispielsweise an einer Welle, insbesondere an einer Getriebewelle des Getriebes, vorgesehen ist. Die Welle ist dabei beispielsweise zumindest mittelbar mit wenigstens einem Rad oder mit mehreren Rädern des Kraftfahrzeugs gekoppelt. Greift die Parkklinke in die korrespondierende Ausnehmung ein, so wird die Welle gegen eine Drehung relativ zu dem genannten Gehäuse gesichert, wodurch das Rad beziehungsweise die Räder gegen eine unerwünschte Drehung gesichert werden. In der Folge wird das Kraftfahrzeug gegen ein unerwünschtes Wegrollen, insbesondere formschlüssig, gesichert. Die Ausnehmung ist beispielsweise durch ein Parksperrenrad gebildet, welches drehfest mit der Welle verbunden oder einstückig mit der Welle ausgebildet sein kann.

Unter dem Einlegen der Parksperre ist dabei insbesondere zu verstehen, dass beispielsweise die Parkklinke aus der Freigabestellung in die Sperrstellung bewegt wird. In der Freigabestellung ist die Parkklinke vollständig außerhalb der Ausnehmung angeordnet. Mit anderen Worten greift die Parcklinke in der Freigabestellung nicht in die Ausnehmung ein, sodass sich die Welle und in der Folge das Rad beziehungsweise die Räder drehen können. Bei dem Verfahren wird die Parksperre eingelegt, während mittels einer Bremsvorrichtung des Kraftfahrzeugs ein Wegrollen des Kraftfahrzeugs zumindest eingeschränkt wird.

Um nun das Gewicht und die Kosten des Kraftfahrzeugs besonders gering halten zu können, ist es erfindungsgemäß vorgesehen, dass als die Bremsvorrichtung, mittels welcher das Wegrollen des Kraftfahrzeugs zumindest eingeschränkt wird, während die Parksperre eingelegt wird, eine von der Betriebsbremse und von der Parkbremse unterschiedliche, zusätzlich dazu vorgesehene Bremsvorrichtung des Kraftfahrzeugs verwendet wird.

Um die Teileanzahl und somit das Gewicht und die Kosten des Kraftfahrzeugs besonders gering halten zu können, ist es erfindungsgemäß vorgesehen, dass die Bremsvorrichtung ein sekundäres, mittels eines Fluids, insbesondere mittels einer Flüssigkeit, betätigbares und einen elektronischen Bremskraftverstärker (eKBV) umfassendes Bremssystem aufweist, mittels welchem das Wegrollen des Kraftfahrzeugs derart zumindest eingeschränkt, insbesondere unterbunden, wird, dass der elektronische Bremskraftverstärker unabhängig von einer durch eine Person wie beispielsweise dem Fahrer des Kraftfahrzeugs bewirkten Betätigung des elektronischen Bremskraftverstärkers einen Druck des Fluids zum Betätigen des Bremsvorrichtung bewirkt. Das sekundäre Bremssystem (SBS) ist zusätzlich zur eigentlichen Betriebsbremse vorgesehen und somit ein redundantes Bremssystem, welches beispielsweise zum Einsatz kommt, um ein besonders sicheres automatisches beziehungsweise autonomes Fahren des Kraftfahrzeugs zu realisieren. Somit wird auch bei dieser Ausführungsform der Erfindung auf eine ohnehin vorgesehene Komponente in Form des sekundären Bremssystems zurückgegriffen, um das Wegrollen des Kraftfahrzeugs auf kosten- und gewichtsgünstige Weise zu vermeiden. In der Folge kann die Parksperre lastarm oder zumindest nahezu lastfrei eingelegt werden, sodass die Parksperre selbst gewichts- und kostengünstig ausgestaltet werden kann.

Während bei herkömmlichen Verfahren und Kraftfahrzeugen lediglich ein fehlerfreier Normalzustand des Kraftfahrzeugs betrachtet wird, berücksichtigt das erfindungsgemäße Verfahren auch einen etwaigen Fehler beziehungsweise Fehlerzustand des Kraftfahrzeugs, wobei im Rahmen des Fehlers beispielsweise die insbesondere als elektronische Parkbremse ausgebildete Parkbremse und/oder die Betriebsbremse ausfällt und somit nicht zur Verfügung steht beziehungsweise nicht genutzt werden kann, um, insbesondere während die Parksperre eingelegt wird, das Wegrollen des Kraftfahrzeugs zumindest einzuschränken. Da bei herkömmlichen Verfahren beziehungsweise Kraftfahrzeugen ein solcher Fehlerfall nicht berücksichtigt wird, muss die Parksperre, insbesondere die Parkklinke, bei herkömmlichen Kraftfahrzeugen besonders massiv und somit gewichts- und kostenintensiv ausgelegt werden, da es beispielsweise bei Ausfall der Betriebsbremse und/oder der Parkbremse zu einem Zustand kommen kann, in welchem das Kraftfahrzeug rollt und sich somit mit einer geringen Geschwindigkeit bewegt, während die Parksperre eingelegt wird. Hierbei dreht sich zum Beispiel das zuvor genannte Parksperrenrad, während die Parkklinke in die Ausnehmung bewegt wird, was zu sehr hohen Belastungen der Parksperre führen kann. Damit bei herkömmlichen Kraftfahrzeugen die Parksperre auch im Fehlerfall die genannten hohen Belastungen schadfrei ertragen kann, muss die Parksperre üblicherweise besonders massiv und somit gewichts- und kostenintensiv ausgelegt werden.

Dies kann nun jedoch mittels des erfindungsgemäßen Verfahrens vermieden werden, da auch bei Ausfall der Betriebsbremse und/oder der Parkbremse eine übermäßige Rollbewegung und somit eine übermäßige Geschwindigkeit des Kraftfahrzeugs vermieden werden kann, während die Parksperre eingelegt wird. Hierzu wird das Wegrollen des Kraftfahrzeugs mittels der genannten Bremsvorrichtung zumindest eingeschränkt, insbesondere unterbunden, sodass sich das Kraftfahrzeug nicht oder nicht übermäßig bewegt, während die Parksperre eingelegt wird. In der Folge kann die Parksperre besonders filigran und somit gewichts- und kostengünstig ausgelegt werden, sodass das Gewicht und die Kosten des Kraftfahrzeugs insgesamt in einem besonders geringen Rahmen gehalten werden können.

Insbesondere liegt der Erfindung die folgende Erkenntnis zugrunde: Über die vorzugsweise als hydraulische Betriebsbremse ausgebildete Betriebsbremse wird das Kraftfahrzeug, insbesondere von dessen Fahrer, üblicherweise in den Stillstand gebremst und anschließend auch im Stillstand gehalten. Bei heutigen, insbesondere als Automatikgetrieben ausgebildeten Getrieben wird dann das Kraftfahrzeug über die auch als Getriebesperre bezeichnete Parksperre in Kombination mit der Parkbremse gesichert, welche beispielsweise als elektrische Parkbremse (EPB) ausgebildet ist. Die Betriebsbremse, die Parksperre und die Parkbremse sind Systeme, welche herkömmlicherweise zumindest weitgehend unabhängig voneinander agieren. Dies führt dazu, dass jedes System für sich möglichst sicher ausgebildet wird. Dabei ist üblicherweise insbesondere die Parksperre, insbesondere die Parkklinke, so ausgebildet, dass im Normalfall die Parksperre nur dann eingelegt wird, wenn beispielsweise ein Parkhebel in eine Parkstellung gebracht wird oder der Fahrer das Kraftfahrzeug verlässt, während sich der Parkhebel in einer Vorwärtsfahr- oder Rückfahrstufe befindet. Befindet sich das Kraftfahrzeug zu diesem Zeitpunkt noch in Bewegung, so ist die Parksperre üblicherweise so ausgebildet, dass die Parkklinke nicht in Eingriff mit der Ausnehmung kommt und über diese beziehungsweise über das Parksperrenrad ratscht. Die Parksperre ist somit eigensicher ausgebildet. Ein Blockieren durch die fälschlicherweise einfahrende beziehungsweise eingelegte Parksperre wird so verhindert.

Mit zunehmender Elektrifizierung von Kraftfahrzeugen können für die Parksperre herkömmliche Konzepte nicht mehr übernommen werden, wobei insbesondere bistationäre Aktoren entwickelt werden, mittels welchen die Parksperre, insbesondere die Parkklinke, aktiv eingelegt und ausgelegt werden kann.

Durch die massive Ausgestaltung der Parksperre weist diese eine aufwändige und somit kosten- und gewichtsintensive Konstruktion auf. Hierbei sind Bauteile vorzusehen, die das beschriebene Ratschen ermöglichen. Ferner sind herkömmlicherweise Lastfälle zu berücksichtigen, in denen die Parkklinke einfällt beziehungsweise eingelegt wird, während sich das Kraftfahrzeug noch bewegt. Hierbei kommt es zu einer hohen, auf die Parksperre wirkenden Belastung, welche bei einer Konstruktion der Parksperre zu berücksichtigen sind. Zum Auslegen der Parksperre, das heißt beispielsweise zum Bewegen der Parkklinke aus der Sperrstellung in die Freigabestellung, ist dabei ferner eine erhöhte Kraft, insbesondere Zugkraft, erforderlich, welche beispielsweise von einem Aktor auf die Parkklinke aufzubringen ist, um diese auszulegen, da die Parksperre unter Last steht beziehungsweise verspannt ist. Ferner soll ein selbständiges Auslegen der Parksperre verhindert werden. Dies erfordert üblicherweise einen Hinterschnitt an der Parkklinke und in der Ausnehmung. Daraus resultiert beispielsweise die Verwendung eines eigenen Zahnrads für die Parksperre, wobei das Zahnrad beispielsweise das zuvor genannte Parksperrenrad ist. Als dies führt dazu, dass herkömmliche Parksperren inklusive des Aktors bauraum-, kosten- und gewichtsintensiv sind.

Diese Probleme beziehungsweise Nachteile können nun mittels des erfindungsgemäßen Verfahrens vermieden werden, da im Rahmen des erfindungsgemäßen Verfahrens auf die von der Betriebsbremse, von der Parkbremse und von der Parksperre unterschiedliche Bremsvorrichtung zurückgegriffen wird, um das Kraftfahrzeug in seinem Stillstand zu sichern beziehungsweise das Wegrollen des Kraftfahrzeugs zumindest einzuschränken, sodass - während die Parksperre eingelegt wird - das Fahrzeug steht beziehungsweise eine übermäßige Bewegung des Fahrzeugs vermieden wird. Insbesondere wird das Wegrollen des Kraftfahrzeugs solange zumindest eingeschränkt, bis die Parksperre, insbesondere die Parkklinke, vollständig eingefahren ist.

Mittels des erfindungsgemäßen Verfahrens kann ausgeschlossen werden, dass die Parksperre eingelegt wird, wenn sich das Kraftfahrzeug übermäßig bewegt. Somit können herkömmlicherweise vorgesehene Sicherheitsmaßnahmen entfallen, sodass die Parksperre, insbesondere die Parkklinke, filigran und somit kosten- und gewichtsgünstig ausgelegt werden kann. Insbesondere ist es möglich, die Parksperre, insbesondere in einem Normalfall, lastfrei ein- und zumindest nahezu lastfrei auszulegen, sodass die Parksperre besonders gewichts- und kostengünstig dimensioniert werden kann. Ferner ist es beispielsweise möglich, zur Realisierung der genannten Ausnehmung kein zusätzliches, separates Parksperrenrad beziehungsweise Zahnrad zu verwenden, sondern die Ausnehmung kann beispielsweise durch ein ohnehin vorgesehenes Zahnrad oder durch eine ohnehin vorgesehene Welle gebildet werden. Ferner ist es beispielsweise möglich, anstelle der auch als Klinke bezeichneten Parkklinke einen bauraum-, gewichts- und kostengünstigen Stift zu verwenden, welcher beispielsweise zwischen der Freigabestellung und der Sperrstellung translatorisch, insbesondere relativ zu dem Gehäuse, bewegt werden kann. Ferner kann beispielsweise dann, wenn das Getriebe als selbsthemmendes Getriebe ausgebildet ist, der zuvor genannte Hinterschnitt vermieden werden, sodass die Parksperre beziehungsweise das Kraftfahrzeug insgesamt besonders kostengünstig ausgestaltet werden kann.

Wird beispielsweise zum Bewegen der Parkklinke beziehungsweise des Stifts zwischen der Freigabestellung und der Sperrstellung ein Aktor, insbesondere ein elektrisch betreibbarer Aktor, verwendet, so kann dieser dadurch, dass die Parkklinke beziehungsweise der Stift besonders lastarm oder gar lastfrei ein- und/oder ausgelegt werden kann, besonders bauraum, gewichts- und kostengünstig ausgelegt werden. Außerdem kann die Parcklinke beziehungsweise der Stift beziehungsweise die Parksperre insgesamt besonders vorteilhaft verbaut beziehungsweise angeordnet werden, wobei die Parksperre beispielsweise in einem Getriebe, einem Differential, direkt an einem zum Antreiben des Kraftfahrzeugs ausgebildeten Motor oder an einer Achse angeordnet werden kann.

Um die Teileanzahl und somit das Gewicht und die Kosten des Kraftfahrzeugs besonders gering halten zu können, ist es in vorteilhafter Ausgestaltung der Erfindung vorgesehen, dass die Bremsvorrichtung wenigstens einen zum Antreiben des Kraftfahrzeugs ausgebildeten Elektromotor umfasst, mittels welchem das Wegrollen des Kraftfahrzeugs derart zumindest eingeschränkt wird, dass mittels des Elektromotors wenigstens eine Welle des Kraftfahrzeugs mehrmals abwechselnd in eine erste Drehrichtung und in eine der ersten Drehrichtung entgegengesetzte zweite Drehrichtung bewegt wird. Mit anderen Worten wird beispielsweise die Welle mittels des Elektromotors, insbesondere mit einer besonders hohen Frequenz, abwechselnd hin- und her bewegt, um dadurch beispielsweise ein Wegrollen beziehungsweise ein übermäßig schnelles Rollen des Kraftfahrzeugs zu vermeiden.

Insgesamt ist erkennbar, dass beispielsweise mittels des Elektromotors wenigstens eine Bewegung der Welle bewirkt wird, um beispielsweise ein Wegrollen beziehungsweise ein übermäßig schnelles Rollen des Kraftfahrzeugs zu vermeiden. Die mittels des Elektromotors bewirkte Bewegung der Welle ist beispielsweise von dem Elektromotor, insbesondere von dessen Art beziehungsweise Ausführung, abhängig. Beispielsweise kann als der Elektromotor ein Elektromotor verwendet werden, der ein Haltemoment direkt stellen kann oder stellt und auf die Welle ausübt, sodass beispielsweise nicht durch schnelles Hin-und Herdrehen, sondern dadurch einen quai-statischer Zustand erreicht oder bewirkt wird, dass die Welle mittels des Elektromotors gehalten und somit gegen eine Drehung gesichert wird. Hierzu übt der Elektromotor das Haltemoment als ein Drehmoment auf die Welle aus.

Die Bremsvorrichtung wird dabei den ohnehin vorgesehenen Elektromotor des beispielsweise als Hybrid- oder Elektrofahrzeug ausgebildeten und mittels des Elektromotors antreibbaren Kraftfahrzeugs. Das erfindungsgemäße Verfahren greift somit auf eine, insbesondere ohnehin vorgesehene, Elektrifizierung des Kraftfahrzeugs zurück und nutzt eine ohnehin vorgesehene, von der Parkbremse, von der Parksperre und von der Betriebsbremse unterschiedliche Komponente in Form des Elektromotors, um das Wegrollen zumindest einzuschränken. Hierdurch kann auf einfache, gewichts- und kostengünstige Weise realisiert werden, dass das Kraftfahrzeug steht und stehenbleibt beziehungsweise sich nicht übermäßig bewegt, während die Parksperre eingelegt wird.

Um beim Einlegen der Parksperre auf die Parksperre wirkende Lasten besonders gering halten und in der Folge die Parksperre besonders gewichts- und kostengünstig ausgestalten zu können, ist es bei einer weiteren Ausführungsform der Erfindung vorgesehen, dass mittels wenigstens einer Sensoreinrichtung, insbesondere des Kraftfahrzeugs, wenigstens eine eine Rollgeschwindigkeit des Kraftfahrzeugs charakterisierende Messgröße erfasst wird, wobei die Parksperre in Abhängigkeit von der erfassten Messgröße eingelegt wird. Die Messgröße ist eine Information, welche beim Einlegen der Parksperre miteinbezogen wird, um beispielsweise anhand der Messgröße sicher identifizieren zu können, ob eine übermäßige Geschwindigkeit, insbesondere Rollgeschwindigkeit, des Kraftfahrzeugs vorliegt oder nicht. Dadurch kann sichergestellt werden, dass die Parksperre dann und insbesondere nur dann eingelegt wird, wenn das Einlegen der Parksperre ohne auf die parksperrende Last oder nur unter geringster Last erfolgt. Ferner wird beispielsweise eine Logik verwendet, welche sicherstellt, dass das Auslegen der Parksperre nicht oder nur unter geringster Last erfolgt, beispielsweise derart, dass mittels des Elektromotors die genannte Ausnehmung beziehungsweise die Getriebewelle derart gedreht wird, um die zunächst eingelegte Parksperre zu entspannen. In der Folge kann die Parksperre lastfrei oder besonders lastarm ausgelegt werden, was sich wiederum auf die von dem Aktor, insbesondere zum Bewegen der Parksperrenklinke, benötigte Kraft auswirkt. Der Aktor muss somit geringere Kräfte stellen und kann so kleiner und günstiger dimensioniert werden. Vorstellbar ist auch ein Technologiewechsel weg vom Getriebemotor, der hohe Kräfte stellen kann, hin zu einem Magneten, der deutlich geringer Kraftniveaus darstellen kann.

In weiterer Ausgestaltung der Erfindung ist es vorgesehen, dass die Parksperre eingelegt wird, wenn die Messgröße einen vorgebbaren Schwellenwert unterschreitet. Hierdurch kann sichergestellt werden, dass die Parksperre dann und vorzugsweise nur dann eingelegt wird, wenn das Kraftfahrzeug nicht oder mit einer nur sehr geringen Geschwindigkeit von beispielsweise weniger als zwei Kilometern pro Stunde rollt.

Als besonders vorteilhaft hat es gezeigt, wenn die Messgröße eine Drehzahl zumindest eines Rads des Kraftfahrzeugs und die Sensoreinrichtung wenigstens einen Raddrehzahlsensor umfasst, mittels welchem die Drehzahl des Rads erfasst wird, wobei die Parksperre in Abhängigkeit von der erfassten Drehzahl des Rads eingelegt und insbesondere dann eingelegt wird, wenn die erfasste Drehzahl des Rads den vorgebbaren Schwellenwert unterschreitet.

Eine weitere Ausführungsform zeichnet sich dadurch aus, dass die Messgröße eine Drehzahl einer Welle des Kraftfahrzeugs, insbesondere des zum Antreiben des Kraftfahrzeugs ausgebildeten Motors des Kraftfahrzeugs, und die Sensoreinrichtung wenigstens einen Wellendrehzahlsensor umfasst, mittels welchem die Drehzahl der Welle erfasst wird, wobei die Parksperre in Abhängigkeit von der erfassten Drehzahl der Welle eingelegt und beispielsweise dann eingelegt wird, wenn die erfasste Drehzahl der Welle den vorgebbaren Schwellenwert unterschreitet. Somit werden beispielsweise Informationen wie die Drehzahl des Motors, wenigstens eine Drehzahl an einem Gang eines Getriebes des Kraftfahrzeugs, einfache oder redundante Raddrehzahlsensoren und/oder weitere, insbesondere die Rollgeschwindigkeit des Kraftfahrzeugs charakterisierende Informationen miteinbezogen, um sicherzustellen, dass die Parksperre dann und vorzugsweise nur dann eingelegt wird, wenn ein Rollen beziehungsweise Wegrollen des Kraftfahrzeugs mit einer übermäßigen Geschwindigkeit unterbleibt.

Um sicherzustellen, dass die Parksperre dann und nur dann eingelegt wird, wenn ein Rollen des Kraftfahrzeugs mit einer übermäßigen Geschwindigkeit unterbleibt, sodass in der Folge die Parksperre und somit das Kraftfahrzeug insgesamt besonders gewichts- und kostengünstig ausgestaltet werden kann, ist es in weiterer Ausgestaltung der Erfindung vorgesehen, dass anhand eines satellitengestützten Navigationssystems eine Geschwindigkeit des Kraftfahrzeugs ermittelt wird, wobei die Parksperre in Abhängigkeit von der ermittelten Geschwindigkeit eingelegt wird. Das satellitengestützte Navigationssystem ist beispielsweise GPS (Global Positioning System), wobei die Parksperre beispielsweise eingelegt wird, wenn die ermittelte Geschwindigkeit des Kraftfahrzeugs den vorgebbaren Schwellenwert unterschreitet.

In weiterer Ausgestaltung der Erfindung wird nach dem Einlegen der Parksperre die Bremsvorrichtung deaktiviert, sodass ein besonders energiearmer und somit kostengünstiger Betrieb realisierbar ist.

Um auf besonders einfache und kostengünstige Weise einen besonders vorteilhaften Betrieb zu realisieren, ist es bei einer weiteren Ausführungsform der Erfindung vorgesehen, dass das Wegrollen des Kraftfahrzeugs mittels der Bremsvorrichtung automatisch zumindest eingeschränkt, insbesondere unterbunden wird, indem eine elektronische Recheneinrichtung des Kraftfahrzeugs die Bremsvorrichtung ansteuert. Mit anderen Worten wird die Bremsvorrichtung mittels der elektronischen Recheneinrichtung gesteuert oder geregelt, um dadurch das Wegrollen des Kraftfahrzeugs zumindest einzuschränken, während die Parksperre eingelegt wird.

Um einen besonders sicheren Betrieb auf gewichts- und kostengünstige Weise zu erreichen, ist es bei einer weiteren Ausführungsform der Erfindung vorgesehen, dass das zunächst fahrende und somit rollende Kraftfahrzeug mittels der elektronischen Recheneinrichtung des Kraftfahrzeugs über die Bremsvorrichtung automatisch abgebremst wird, indem die Recheneinrichtung die Bremsvorrichtung ansteuert, woraufhin mittels der Bremsvorrichtung das Wegrollen des Kraftfahrzeugs zumindest eingeschränkt wird. Hierdurch ist beispielsweise ein autonomer beziehungsweise automatischer oder aber ein teil-autonomer beziehungsweise teil-automatischer Betrieb des Kraftfahrzeugs realisierbar, insbesondere unter Nutzung bereits vorhandener Komponenten, sodass die Teileanzahl, das Gewicht und die Kosten des Kraftfahrzeugs in einem besonders geringen Rahmen gehalten werden können.

Ein zweiter Aspekt der Erfindung betrifft ein Kraftfahrzeug, insbesondere einen Kraftwagen und vorzugsweise einen Personenkraftwagen. Das Kraftfahrzeug umfasst eine Parksperre, eine Betriebsbremse und eine Parkbremse.

Um nun das Kraftfahrzeug besonders gewichts- und kostengünstig ausgestalten zu können, ist erfindungsgemäß eine von der Betriebsbremse, von der Parkbremse und von der Parksperre unterschiedliche, zusätzlich dazu vorgesehene Bremseinrichtung vorgesehen, welche dazu ausgebildet ist, während eines Einlegens der Parksperre ein Wegrollen des Kraftfahrzeugs zumindest einzuschränken, insbesondere zu unterbinden.

Erfindungsgemäß ist vorgesehen, dass die Bremsvorrichtung ein sekundäres, mittels eines Fluids, insbesondere mittels einer Flüssigkeit, betätigbares und einen elektronischen Bremskraftverstärker (eKBV) umfassendes Bremssystem aufweist, mittels welchem das Wegrollen des Kraftfahrzeugs derart zumindest eingeschränkt, insbesondere unterbunden, wird, dass der elektronische Bremskraftverstärker unabhängig von einer durch eine Person wie beispielsweise dem Fahrer des Kraftfahrzeugs bewirkten Betätigung des elektronischen Bremskraftverstärkers einen Druck des Fluids zum Betätigen des Bremsvorrichtung bewirkt. Das sekundäre Bremssystem (SBS) ist zusätzlich zur eigentlichen Betriebsbremse vorgesehen und somit ein redundantes Bremssystem, welches beispielsweise zum Einsatz kommt, um ein besonders sicheres automatisches beziehungsweise autonomes Fahren des Kraftfahrzeugs zu realisieren. Somit wird auch bei dieser Ausführungsform der Erfindung auf eine ohnehin vorgesehene Komponente in Form des sekundären Bremssystems zurückgegriffen, um das Wegrollen des Kraftfahrzeugs auf kosten- und gewichtsgünstige Weise zu vermeiden. In der Folge kann die Parksperre lastarm oder zumindest nahezu lastfrei eingelegt werden, sodass die Parksperre selbst gewichts- und kostengünstig ausgestaltet werden kann.

Somit ist das erfindungsgemäße Kraftfahrzeug beispielsweise zum Durchführen eines erfindungsgemäßen Verfahrens ausgebildet. Vorteile und vorteilhafte Ausgestaltungen des ersten Aspekts der Erfindung sind als Vorteile und vorteilhafte Ausgestaltungen des zweiten Aspekt der Erfindung anzusehen und umgekehrt.

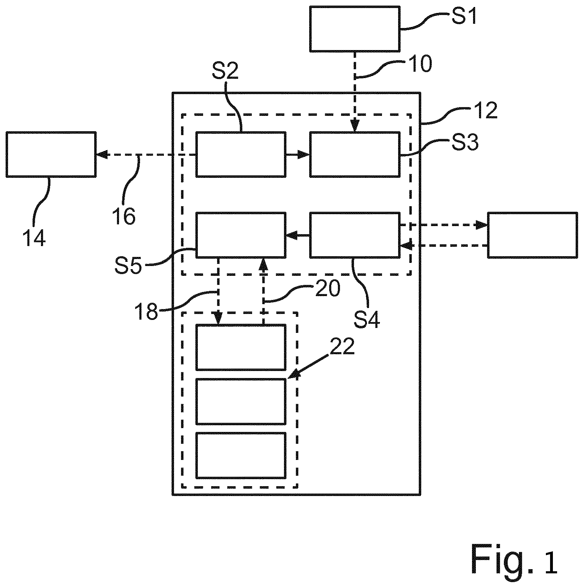

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur ein Flussdiagramm zum Veranschaulichen eines erfindungsgemäßen Verfahrens zum Einlegen einer Parksperre eines Kraftfahrzeugs.

Die einzige Figur zeigt ein Flussdiagram zum Veranschaulichen eines Verfahrens zum Einlegen einer Parksperre eines die Parksperre, eine Betriebsbremse und eine Parkbremse aufweisenden Kraftfahrzeugs, das beispielsweise als Kraftwagen, insbesondere als Personenkraftwagen, ausgebildet ist. Das Kraftfahrzeug umfasst ferner beispielsweise eine elektronische Recheneinrichtung, mittels welcher ein elektronisches Stabilitätsprogramm zur Fahrdynamikregelung realisiert ist, sodass mittels des elektronischen Stabilitätsprogramms kritischen Fahrzuständen aktiv und insbesondere automatisch entgegengewirkt werden kann.

Das Kraftfahrzeug umfasst ferner beispielsweise wenigstens eine Sensoreinrichtung, mittels welcher beispielsweise bei einem ersten Schritt S1 des Verfahrens wenigstens eine Geschwindigkeit, insbesondere eine Rollgeschwindigkeit, des Kraftfahrzeugs charakterisierende Messgröße erfasst wird. Die Sensoreinrichtung umfasst beispielsweise je Rad des Kraftfahrzeugs wenigstens einen Raddrehzahlsensor, mittels welchem eine jeweilige, auch als Raddrehzahl bezeichnete Drehzahl des jeweiligen Rads erfasst wird. Anhand der jeweiligen Raddrehzahl kann eine jeweilige Geschwindigkeit ermittelt werden, mit welcher sich das jeweilige Rad dreht. Beträgt die Geschwindigkeit beispielsweise 0, so kann dadurch erfasst werden, dass sich das Kraftfahrzeug in seinem Stillstand befindet. Alternativ oder zusätzlich umfasst die Sensoreinrichtung beispielsweise wenigstens einen Wellendrehzahlsensor, mittels welchem eine auch als Wellendrehzahl bezeichnete Drehzahl wenigstens einer Welle des Kraftfahrzeugs erfasst wird. Die Welle ist beispielsweise eine Getriebewelle eines Getriebes des Kraftfahrzeugs. Ferner kann die Welle eine Abtriebswelle eines zum Antreiben des Kraftfahrzeugs ausgebildeten Motors sein. Der Motor ist beispielsweise ein Verbrennungsmotor, insbesondere eine Hubkolbenmaschine, oder aber ein Elektromotor, sodass das Kraftfahrzeug beispielsweise als Hybrid- oder Elektrofahrzeug ausgebildet ist. Anhand der Wellendrehzahl kann eine Geschwindigkeit erfasst werden, mit welcher sich die Welle dreht. Beträgt die Wellendrehzahl beziehungsweise die Geschwindigkeit, mit welcher sich die Welle dreht, 0, so kann beispielsweise davon ausgegangen werden, dass sich das Kraftfahrzeug in seinem Stillstand befindet.

Ferner ist es denkbar, dass die Sensoreinrichtung wenigstens ein Kommunikationselement aufweist, welches beispielsweise zumindest mittelbar mit Satelliten eines satellitengestützten Navigationssystems kommunizieren kann. Auf diese Weise ist es beispielsweise mittels des Kommunikationselements und mittels des satellitengestützten Navigationssystems möglich, eine auch als Fahrgeschwindigkeit bezeichnete Geschwindigkeit, mit welcher sich das Fahrzeug beispielsweise auf der Erde beziehungsweise relativ zu einem Untergrund bewegt, zu ermitteln, sodass anhand der Fahrgeschwindigkeit ermittelt werden kann, ob sich das Kraftfahrzeug in seinem Stillstand befindet oder relativ zu dem Untergrund beziehungsweise entlang des Untergrunds bewegt.

Wie in der Figur durch einen gestrichelten Pfeil 10 veranschaulicht ist, stellt die Sensoreinrichtung beispielsweise bei dem ersten Schritt S1 wenigstens ein, insbesondere elektrisches, Signal bereit, welches die erfasste beziehungsweise ermittelte Geschwindigkeit charakterisiert. Das Signal und somit die ermittelte erfasste Geschwindigkeit werden beispielsweise einem System oder einem Modul 12 zugeführt, wobei das Modul 12 beispielsweise durch die elektronische Recheneinrichtung realisiert ist. Mittels des Moduls 12 kann ein sicheres Parken des Kraftfahrzeugs derart realisiert werden, dass das Kraftfahrzeug besonders kosten- und gewichtsgünstig ausgestaltet werden kann.

Wie im Folgenden noch genauer erläutert wird, wird bei dem Verfahren die Parksperre eingelegt, während mittels einer Bremsvorrichtung des Kraftfahrzeugs ein Wegrollen des Kraftfahrzeugs zumindest eingeschränkt, insbesondere unterbunden, wird. Um dabei das Gewicht und die Kosten des Kraftfahrzeugs besonders gering halten zu können, wird als die Bremsvorrichtung ein von der Betriebsbremse, von der Parksperre und von der Parkbremse unterschiedliche, zusätzliche dazu vorgesehene Bremsvorrichtung des Kraftfahrzeugs verwendet.

Im Folgenden wird beispielsweise ein fehlerfreier Betrieb des Kraftfahrzeugs beschrieben. In dem fehlerfreien Betrieb wird bei einem zweiten Schritt S2 des Verfahrens das sich beispielsweise zunächst mit einer gewissen Geschwindigkeit bewegende und sich somit relativ zu dem Untergrund fahrbewegende Kraftfahrzeug, insbesondere automatisch mittels der elektronischen Recheneinrichtung, abgebremst beziehungsweise verzögert, wobei beispielsweise das Kraftfahrzeug mittels des elektronischen Stabilitätsprogramms abgebremst beziehungsweise verzögert wird. Insbesondere wird das Kraftfahrzeug bei dem zweiten Schritt S2 beispielsweise in seinen Stillstand gebremst. Hierzu stellt beispielsweise die elektronische Recheneinrichtung beziehungsweise das elektronische Stabilitätsprogramm eine durch einen Pfeil 16 veranschaulichte Verzögerungsanforderung an ein Modul 14, mittels welchem beispielsweise das Kraftfahrzeug verzögert beziehungsweise abgebremst und dabei insbesondere in den Stillstand verzögert wird. Das Modul 14 ist beispielsweise durch die elektronische Recheneinrichtung realisiert.

Bei einem dritten Schritt S3 des Verfahrens wird ermittelt beziehungsweise erkannt, dass die Geschwindigkeit des Kraftfahrzeugs einen vorgebbaren Schwellenwert unterschreitet beziehungsweise dass sich das Kraftfahrzeug in dem Stillstand befindet. Beispielsweise wird somit bei dem dritten Schritt S3 sicher erkannt, dass sich das Kraftfahrzeug in seinem Stillstand befindet. Beispielsweise wird anhand des genannten Signals erkannt, dass die Geschwindigkeit, mit der sich das Kraftfahrzeug entlang des Untergrunds bewegt, den vorgebbaren Schwellenwert unterschreitet beziehungsweise dass sich das Kraftfahrzeug in seinem Stillstand befindet. Bei dem fehlerfreien Betrieb wird beispielsweise anhand der Raddrehzahlsensoren beziehungsweise anhand der Raddrehzahlen erkannt, dass sich das Kraftfahrzeug im Stillstand befindet beziehungsweise dass die Geschwindigkeit des Kraftfahrzeugs den Schwellenwert unterschreitet.

Bei einem vierten Schritt S4 des Verfahrens wird der Stillstand beibehalten beziehungsweise ein Wegrollen des Kraftfahrzeugs wird zumindest eingeschränkt. Wird beispielsweise bei dem zweiten Schritt S2 das Kraftfahrzeug mittels der Betriebsbremse und somit mittels eines auch als Bremsdruck bezeichneten Drucks einer Bremsflüssigkeit abgebremst, so wird beispielsweise bei dem vierten Schritt S4 das Kraftfahrzeug mittels der Betriebsbremse und somit mittels eines auch als Bremsdruck bezeichneten Drucks einer Bremsflüssigkeit abgebremst, und so wird beispielsweise bei dem vierten Schritt S4 über Ventile des elektronischen Stabilitätsprogramms der Bremsdruck so lange eingesperrt beziehungsweise gehalten, bis die insbesondere als elektrische Parkbremse ausgebildete Parkbremse geschlossen ist und/oder die Parksperre eingelegt ist. Mit anderen Worten wird bei dem vierten Schritt S4 in dem fehlerfreien Betrieb das Kraftfahrzeug mittels des Bremsdrucks im Stillstand gehalten, während die Parksperre eingelegt und/oder die Parkbremse geschlossen wird.

Bei einem fünften Schritt S5 des Verfahrens wird beispielsweise der Stillstand des Kraftfahrzeugs dauerhaft gesichert. Hierzu wird beispielsweise bei dem fünften Schritt S5 des Verfahren in dem fehlerfreien Betrieb der hydraulische Bremsdruck abgelassen beziehungsweise reduziert, sodass dann die geschlossene Parkbremse und/oder die eingelegte Parksperre den Stillstand und somit das Kraftfahrzeug gegen ein unerwünschtes Wegrollen sichern.

Hierzu erfolgt beispielsweise ein durch Pfeile 18 und 20 veranschaulichter Datenaustausch mit Modulen 22, mittels welchen beispielsweise der Stillstand gesichert wird. Die Module 22 sind beispielsweise durch die elektronische Recheneinrichtung realisiert und werden beispielsweise genutzt, um wenigstens einen Aktor der Parkbremse und/oder wenigstens einen Aktor der Parksperre anzusteuern, sodass beispielsweise mittels des jeweiligen Aktors die Parkbremse beziehungsweise die Parksperre geschlossen beziehungsweise eingelegt werden kann. Durch den Pfeil 18 ist beispielsweise eine Anforderung an die Module 22 veranschaulicht, sodass mittels der Module 22 beispielsweise die Parkbremse geschlossen und/oder die Parksperre eingelegt wird. Ist dies erfolgreich, so erfolgt beispielsweise eine durch den Pfeil 20 veranschaulichte Rückmeldung, dass die Parkbremse geschlossen beziehungsweise die Parksperre eingelegt ist.

Im Folgenden wird ein Fehler beziehungsweise ein Fehlerfall des Kraftfahrzeugs beschrieben. In diesem Fehlerfall ist beispielsweise die Parkbremse ausgefallen, da beispielsweise das elektronische Stabilitätsprogramm, welches die Parkbremse ansteuert, ausgefallen ist. In dem Fehlerfall wird beispielsweise bei dem zweiten Schritt S2 das Kraftfahrzeug, insbesondere automatisch, von der elektronischen Recheneinrichtung, über die zuvor genannte, von der Betriebsbremse, von der Parkbremse und von der Parksperre unterschiedliche Bremsvorrichtung abgebremst und dabei insbesondere in den Stillstand verzögert, insbesondere während die Parksperre noch ausgelegt ist. Hierzu umfasst die Bremsvorrichtung beispielsweise den zuvor genannten, zum Antreiben des Kraftfahrzeugs ausgebildeten Elektromotor und/oder ein sekundäres Bremssystem (SBS). In dem Fehlerfall wird bei dem dritten Schritt S3 der Stillstand des Kraftfahrzeugs beziehungsweise der Umstand, dass die Geschwindigkeit des Kraftfahrzeugs den Schwellenwert unterschreitet, beispielsweise über redundante, an das sekundäre Bremssystem angeschlossene Raddrehzahlsensoren und/oder dadurch erkannt, dass eine Drehzahl des zuvor genannten Motors, insbesondere eine Abtriebswelle des Motors, erfasst wird und/oder dass eine Getriebeabgangsdrehzahl eines Getriebes erfasst wird. Alternativ oder zusätzlich kann bei dem dritten Schritt S3 der Stillstand des Kraftfahrzeugs beziehungsweise der Umstand, dass die Geschwindigkeit des Kraftfahrzeugs den Schwellenwert unterschreitet, anhand der mittels des satellitengestützten Navigationssystems ermittelten Geschwindigkeit des Kraftfahrzeugs erkannt werden.

In dem Fehlerfall wird bei dem vierten Schritt S4 des Verfahrens der Stillstand beibehalten beziehungsweise das Kraftfahrzeug gegen ein übermäßiges Rollen beziehungsweise Wegrollen gesichert, indem die Bremsvorrichtung als bremsende Einrichtung das Wegrollen des Kraftfahrzeugs zumindest einschränkt. Unter dem Einschränken des Wegrollens des Kraftfahrzeugs kann verstanden werden, dass ein Wegrollen beziehungsweise ein Rollen des Kraftfahrzeugs vollständig unterbunden wird, sodass sich das Kraftfahrzeug nicht bewegt. Ferner kann unter dem Einschränken des Wegrollens verstanden werden, dass eine geringe Bewegung des Kraftfahrzeugs mit einer nur geringen Geschwindigkeit zugelassen wird. Insbesondere kann beispielsweise das Wegrollen des Kraftfahrzeugs mittels der Bremsvorrichtung derart zumindest eingeschränkt werden, dass die Bremsvorrichtung den zuvor genannten Elektromotor umfasst, mittels welchem wenigstens eine Welle des Kraftfahrzeugs abwechselnd hin- und her gedreht wird. In dem Fehlerfall wird bei dem vierten Schritt S4 des Verfahrens das Wegrollen des Kraftfahrzeugs zumindest eingeschränkt, während die Parksperre eingelegt wird, wobei das Wegrollen des Kraftfahrzeugs zumindest so lange eingeschränkt wird, bis die Parksperre vollständig eingelegt ist.

In dem Fehlerfall wird bei dem fünften Schritt S5 des Verfahrens die Bremsvorrichtung abgeschaltet beziehungsweise deaktiviert, nachdem die Parksperre eingelegt wurde, wodurch der Stillstand und somit ein Parken des Kraftfahrzeugs mittels der Parksperre dauerhaft gesichert werden können.

## Patentansprüche

1. Verfahren zum Einlegen einer Parksperre eines eine Betriebsbremse und eine Parkbremse aufweisenden Kraftfahrzeugs, bei welchem die Parksperre eingelegt wird, während mittels einer Bremsvorrichtung des Kraftfahrzeugs ein Wegrollen des Kraftfahrzeugs zumindest eingeschränkt wird (Schritt S4), wobei als die Bremsvorrichtung eine von der Betriebsbremse und von der Parkbremse unterschiedliche, zusätzlich dazu vorgesehene Bremsvorrichtung des Kraftfahrzeugs verwendet wird (Schritt S4),
**dadurch gekennzeichnet, dass**
die Bremsvorrichtung ein sekundäres, mittels eines Fluids betätigbares und einen elektronischen Bremskraftverstärker umfassendes Bremssystem aufweist, mittels welchem das Wegrollen des Kraftfahrzeugs derart zumindest eingeschränkt wird, dass der elektronische Bremskraftverstärker unabhängig von einer durch eine Person bewirkten Betätigung des elektronischen Bremskraftverstärkers einen Druck des Fluids zum Betätigen der Bremsvorrichtung bewirkt (Schritt S4).

2. Verfahren nach Anspruch 1,
**dadurch gekennzeichnet, dass**
die Bremsvorrichtung wenigstens einen zum Antreiben des Kraftfahrzeugs ausgebildeten Elektromotor umfasst, mittels welchem das Wegrollen des Kraftfahrzeugs derart zumindest eingeschränkt wird, dass mittels des Elektromotors wenigstens eine Welle des Kraftfahrzeugs mehrmals abwechselnd in eine erste Drehrichtung und in eine der ersten Drehrichtung entgegengesetzte zweite Drehrichtung bewegt wird (Schritt S4).

3. Verfahren nach Anspruch 1 oder 2,
**dadurch gekennzeichnet, dass**
mittels wenigstens einer Sensoreinrichtung wenigstens eine eine Rollgeschwindigkeit des Kraftfahrzeugs charakterisierende Messgröße erfasst wird, wobei die Parksperre in Abhängigkeit von der erfassten Messgröße eingelegt wird (Schritt S1).

4. Verfahren nach Anspruch 3,
**dadurch gekennzeichnet, dass**
die Parksperre eingelegt wird, wenn die Messgröße einen vorgebbaren Schwellenwert unterschreitet (Schritt S4).

5. Verfahren nach Anspruch 3 oder 4,
**dadurch gekennzeichnet, dass**
Messgröße eine Drehzahl zumindest eines Rads des Kraftfahrzeugs und die Sensoreinrichtung wenigstens einen Radrehzahlsensor umfasst, mittels welchem die Drehzahl des Rads erfasst wird, wobei die Parksperre in Abhängigkeit von der erfassten Drehzahl des Rads eingelegt wird (Schritt S1).

6. Verfahren nach einem der Ansprüche 3 bis 5,
**dadurch gekennzeichnet, dass**
die Messgröße eine Drehzahl einer Welle des Kraftfahrzeugs, insbesondere eines zum Antreiben des Kraftfahrzeugs ausgebildeten Motors des Kraftfahrzeugs, und die Sensoreinrichtung wenigstens einen Wellendrehzahlsensor umfasst, mittels welchem die Drehzahl der Welle erfasst wird, wobei die Parksperre in Abhängigkeit von der erfassten Drehzahl der Welle eingelegt wird (Schritt S1).

7. Verfahren nach einem der vorhergehenden Ansprüche,
**dadurch gekennzeichnet, dass**
anhand eines satellitengestützten Navigationssystems eine Geschwindigkeit des Kraftfahrzeugs ermittelt wird, wobei die Parksperre in Abhängigkeit von der ermittelten Geschwindigkeit eingelegt wird (Schritt S1).

8. Verfahren nach einem der vorhergehenden Ansprüche,
**dadurch gekennzeichnet, dass**
nach dem Einlegen der Parksperre die Bremsvorrichtung deaktiviert wird (Schritt S5).

9. Verfahren nach einem der vorhergehenden Ansprüche,
**dadurch gekennzeichnet, dass**
das Wegrollen des Kraftfahrzeugs mittels der Bremsvorrichtung automatisch zumindest eingeschränkt wird, indem eine elektronische Recheneinrichtung des Kraftfahrzeugs die Bremsvorrichtung ansteuert (Schritt S4).

10. Verfahren nach Anspruch 9,
**dadurch gekennzeichnet, dass**
das zunächst fahrende Kraftfahrzeug mittels der elektronischen Recheneinrichtung des Kraftfahrzeugs über die Bremsvorrichtung automatisch abgebremst wird, indem die Recheneinrichtung die Bremsvorrichtung ansteuert, woraufhin mittels der Bremsvorrichtung das Wegrollen des Kraftfahrzeugs zumindest eingeschränkt wird (Schritt S2).

11. Kraftfahrzeug, mit einer Parksperre, mit einer Betriebsbremse und mit einer Parkbremse, wobei
eine von der Betriebsbremse und von der Parkbremse unterschiedliche, zusätzlich dazu vorgesehene Bremsvorrichtung dazu ausgebildet ist, während eines Einlegens der Parksperre ein Wegrollen des Kraftfahrzeugs zumindest einzuschränken,
**dadurch gekennzeichnet, dass**
die Bremsvorrichtung ein sekundäres, mittels eines Fluids betätigbares und einen elektronischen Bremskraftverstärker umfassendes Bremssystem aufweist, mittels welchem das Wegrollen des Kraftfahrzeugs derart zumindest eingeschränkt wird, dass der elektronische Bremskraftverstärker unabhängig von einer durch eine Person bewirkten Betätigung des elektronischen Bremskraftverstärkers einen Druck des Fluids zum Betätigen der Bremsvorrichtung bewirkt (Schritt S4).

## Claims

1. Method for engaging a parking lock of a motor vehicle having a service brake and a parking brake, in which the parking lock is engaged while rolling away of the motor vehicle is at least restricted by means of a braking device of the motor vehicle (step S4), wherein a braking device of the motor vehicle that is different from the service brake and from the parking brake and is provided in addition thereto is used as the braking device (step S4),
**characterised in that**
the braking device has a secondary braking system that can be actuated by means of a fluid and has an electronic brake booster, by means of which the rolling away of the motor vehicle is at least limited in such a way that the electronic brake booster causes a pressure of the fluid to actuate the braking device independently of an actuation of the electronic brake booster that is brought about by a person (step S4).

2. Method according to claim 1,
**characterised in that**
the braking device comprises at least one electric motor configured to drive the motor vehicle, by means of which the rolling away of the motor vehicle is at least limited in such a way that by means of the electric motor at least one shaft of the motor vehicle is moved several times alternately in a first direction of rotation and in a second direction of rotation opposite thereto (step S4).

3. Method according to claim 1 or 2,
**characterised in that**
at least one measurement variable characterising a rolling speed of the motor vehicle is detected by means of at least one sensor device, the parking lock being engaged as a function of the detected measurement variable (step S1).

4. Method according to claim 3,
**characterised in that**
the parking lock is engaged when the measurement value falls below a settable threshold value (step S4).

5. Method according to claim 3 or 4,
**characterised in that**
the measured variable is a rotational speed of at least one wheel of the motor vehicle and the sensor device comprises at least one wheel speed sensor by means of which the rotational speed of the wheel is detected, the parking lock being engaged as a function of the detected rotational speed of the wheel (step S1).

6. Method according to any one of claims 3 to 5,
**characterised in that**
the measurement variable comprises a rotational speed of a shaft of the motor vehicle, in particular of an engine of the motor vehicle configured to drive the motor vehicle, and the sensor device comprises at least one shaft speed sensor by means of which the rotational speed of the shaft is detected, the parking lock being engaged as a function of the detected rotational speed of the shaft (step S1).

7. Method according to any one of the preceding claims,
**characterised in that**
a speed of the motor vehicle is determined using a satellite-based navigation system, the parking lock being engaged as a function of the determined speed (step S1).

8. Method according to any one of the preceding claims,
**characterised in that**
after engagement of the parking lock, the braking device is deactivated (step S5).

9. Method according to any one of the preceding claims,
**characterised in that**
the rolling away of the motor vehicle is automatically at least limited by means of the braking device, by an electronic computing device of the motor vehicle controlling the braking device (step S4).

10. Method according to claim 9,
**characterised in that**
the initially moving motor vehicle is automatically braked by means of the electronic computing device of the motor vehicle via the braking device, by the computing device controlling the braking device, whereupon the rolling away of the motor vehicle is at least limited by means of the braking device (step S2).

11. Motor vehicle comprising a parking lock, comprising a service brake and a parking brake, wherein
a braking device that is different from the service brake and from the parking brake and is provided in addition thereto is configured to at least limit rolling away of the motor vehicle during engagement of the parking lock,
**characterised in that**
the braking device has a secondary braking system that can be actuated by means of a fluid and has an electronic brake booster, by means of which the rolling away of the motor vehicle is at least limited in such a way that the electronic brake booster causes a pressure of the fluid to actuate the braking device independently of an actuation of the electronic brake booster that is brought about by a person (step S4).

## Revendications

1. Procédé pour enclencher un verrouillage de stationnement d'un véhicule automobile présentant un frein de service et un frein de stationnement, dans lequel le verrouillage de stationnement est enclenché tandis qu'un déplacement du véhicule automobile est au moins limité au moyen d'un dispositif de freinage du véhicule automobile (étape S4), dans lequel un dispositif de freinage du véhicule automobile prévu à cet effet, différent d'un frein de service et d'un frein de stationnement, est en outre utilisé (étape S4),
**caractérisé en ce que**
le dispositif de freinage présente un système de freinage secondaire, qui peut être actionné au moyen d'un fluide et comprenant un servofrein électronique, au moyen duquel le déplacement du véhicule à moteur est au moins limité de telle sorte que le servofrein électronique provoque, indépendamment d'un actionnement du servofrein électronique provoqué par une personne, une pression du fluide pour actionner le dispositif de freinage (étape S4).

2. Procédé selon la revendication 1,
**caractérisé en ce que**
le dispositif de freinage comprend au moins un moteur électrique conçu pour entraîner le véhicule automobile, au moyen duquel le déplacement du véhicule automobile est au moins limité de telle manière qu'au moins un arbre du véhicule automobile est déplacé au moyen du moteur électrique plusieurs fois alternativement dans une première direction de rotation et dans une seconde direction de rotation opposée à la première direction de rotation (étape S4).

3. Procédé selon la revendication 1 ou 2,
**caractérisé en ce que**
au moins une grandeur de mesure caractérisant une vitesse de déplacement du véhicule automobile est détectée au moyen d'au moins un dispositif capteur, dans lequel le verrouillage de stationnement est enclenché en fonction de la grandeur de mesure détectée (étape S1).

4. Procédé selon la revendication 3,
**caractérisé en ce**
**que** le verrouillage de stationnement est enclenché lorsque la grandeur de mesure dévient inférieure à une valeur de seuil prédéterminée (étape S4).

5. Procédé selon la revendication 3 ou 4,
**caractérisé en ce que**
la grandeur de mesure comprend une vitesse de rotation d'au moins une roue du véhicule automobile et le dispositif capteur comprend au moins un capteur de vitesse de rotation de roue, au moyen duquel la vitesse de rotation de la roue est détectée, dans lequel le verrouillage de stationnement est enclenché en fonction de la vitesse de rotation détectée de la roue (étape S1).

6. Procédé selon l'une des revendications 3 à 5,
**caractérisé en ce que**
la grandeur de mesure comprend une vitesse de rotation d'un arbre du véhicule automobile, en particulier d'un moteur du véhicule automobile conçu pour entraîner le véhicule automobile, et le dispositif capteur comprend au moins un capteur de vitesse de rotation d'arbre, au moyen duquel la vitesse de rotation de l'arbre est détectée, dans lequel le verrouillage de stationnement est enclenché en fonction de la vitesse de rotation détectée de l'arbre (étape S1).

7. Procédé selon l'une quelconque des revendications précédentes,
**caractérisé en ce que**
une vitesse du véhicule automobile est déterminée à l'aide d'un système de navigation assisté par satellite, dans lequel le verrouillage de stationnement est enclenché en fonction de la vitesse déterminée (étape S1).

8. Procédé selon l'une quelconque des revendications précédentes,
**caractérisé en ce que**
après l'enclenchement du verrouillage de stationnement, le dispositif de freinage est désactivé (étape S5).

9. Procédé selon l'une quelconque des revendications précédentes,
**caractérisé en ce que**
le déplacement du véhicule automobile est au moins limité automatiquement au moyen du dispositif de freinage, dans lequel le dispositif de freinage commande un dispositif de calcul électronique du véhicule automobile (étape S4).

10. Procédé selon la revendication 9,
**caractérisé en ce que**
le véhicule automobile qui se déplace dans un premier temps est automatiquement freiné au moyen du dispositif de calcul électronique du véhicule automobile via le dispositif de freinage, dans lequel le dispositif de calcul commande le dispositif de freinage, après quoi le déplacement du véhicule automobile est au moins limité par le dispositif de freinage (étape S2).

11. Véhicule automobile avec un verrouillage de stationnement, avec un frein de service et avec un frein de stationnement, dans lequel
un dispositif de freinage prévu à cet effet différent du frein de service et du frein de stationnement est en outre conçu pour au moins limiter un déplacement du véhicule automobile lorsque le verrouillage de stationnement est enclenché,
**caractérisé en ce que**
le dispositif de freinage présente un système de freinage secondaire qui peut être actionné au moyen d'un fluide et comprenant un servofrein électronique, au moyen duquel le déplacement du véhicule automobile est au moins limité de telle sorte que le servofrein électronique provoque, indépendamment d'un actionnement du servofrein électronique provoqué par une personne, une pression du fluide pour actionner le dispositif de freinage (étape S4).
